# EUROPEAN PATENT SPECIFICATION

(11) **EP 0 448 722 B1**
(45) Date of publication and mention of the grant of the patent: **02.01.1997**
(21) Application number: 90914757.1
(22) Date of filing: 09.10.1990
(51) Int. Cl.: G21K 5/00, G21K 5/10, C08J 7/00, G21K 5/04, G21K 1/04

(54) **Apparatus for controlling the dose of irradiation of a product**
Einrichtung zur Übervachung der Bestrahlungsdosis eines Produktes
Installation de contrôle de la dose d'irradiation d'un produit

(30) Priority: 09.10.1989 JP 263406/89
(43) Date of publication of application: 02.10.1991
(73) Proprietor: Yoshino Kogyosho Co., Ltd., Tokyo 136 (JP)
(72) Inventor: OSHIDA, Mamoru Yoshino Kogyosho Co., Ltd., Koto-ku Tokyo 136 (JP); OIZUMI, Masaru Yoshino Kogyosho Co., Ltd., Koto-ku Tokyo 136 (JP); ICHIZAWA, Yoshiyuki Yoshino Kogyosho Co., Ltd., Koto-ku Tokyo 136 (JP)
(74) Representative: Crouch, David John
(86) International application number: PCT/JP90/01304
(87) International publication number: WO 91/05353

(56) References cited:
- DE-B- 2 004 050
- JP-A-61 220 844
- JP-B- 0 573 920

## Description

The present invention relates to an apparatus for controlling the dose of irradiation, designed for controlling the dose of electron rays with which a synthetic resin product is irradiated. The product may be a bottle or a film or its preform. Such control may eliminate the monomers contained in the product. It is also desirable to control the dose of ultraviolet or infrared rays with which such a product is irradiated for surface treatment, material treatment or sterilisation.

With a view to eliminating the monomers contained in synthetic resin products, their preforms are normally carried through an electron ray irradiation zone on a conveyor belt of a production line. A number of conveyors arranged in parallel may be passed through such an electron ray irradiation zone, each of the conveyors carrying products of a type which is different from those on the other conveyors.

With such an arrangement, the amount of electron rays with which products are irradiated should be differentiated depending on the thickness and shape of the products and other considerations. Such differentiation of dose of electron rays is normally realised by moving the conveyor belts at different speeds to optimise the duration of exposure to each of the products in the irradiation zone, the speed of each of the conveyor belts being appropriately selected to meet the required amount of electron rays for preforms on it.

With a conventional apparatus for exposure of products to electron rays or other rays, the number of products that can be fed to a conveyor per unit time often differs from the number of products that can be treated by electron rays per unit time.

Thus, such discrepancy results in congestion of products on conveyor belts and some of them accidentally falling there from, thereby problems occur such as poor productivity of the production line.

In other words, if a plurality of conveyors are installed within a production line, the number of products fed onto each of the conveyors is a function of their size and shape while the speed at which each of the conveyors is operated is a function of the dose required by the products being carried on it and there are no existing apparatuses that simultaneously satisfy these two functional requirements, resulting in too poorly fed conveyors that operate at a high speed and too heavily fed conveyors that operate at a low speed and accompanied by the problem of congestion and occasional accidents.

Previously in Patent Specification No. DE-B-2004 050 and in the abstract of Nuclear Science Abstracts 24M565 JP-A-61 220 844 (Toshiba Electric Equip Corp.) apparatuses which are able to control the dose of irradiation of products by adjusting or varying the thickness of intermediate bodies or layers are disclosed.

It is an aim of the invention to provide an apparatus for controlling the dose of irradiation that can accurately control the dose of electron rays, ultraviolet rays, infrared rays or other rays to meet the exposure requirements of the products on a production line and therefore eliminate the problems of congestion and occasional accidents as described above.

Accordingly, this aim of the invention is addressed by providing an apparatus for controlling the dose of irradiation of a product comprising a first barrier body and a second barrier body, having the same configuration as the first barrier body, arranged in juxtaposition with one another, and arranged between a conveyor of the product and an irradiation device located opposite to the conveyor, the said first barrier and the said second barrier both being slidably movable along a running direction of the conveyor, characterised in that each body comprises a plurality of oblique sections arranged obliquely to the running direction of the conveyor, the relative position between the first barrier body and the second barrier body in the running direction of the conveyor being so adjustable as to enable control of the dose of irradiation reaching the product.

Each of the first and second barrier bodies may be so constructed that it is formed with a conduit for circulation of coolant, preferably water, through an internal area of the body.

With an apparatus for controlling the dose of irradiation according to the invention, where a product is exposed to electron rays irradiated by the irradiation device as it moves on the conveyor, the product can be exposed to electron rays to a maximum extent by removing the first and second barrier bodies from the electron rays irradiation zone through a sliding action.

When the dose to which the product is subjected should be limited to a given extent, it can be controlled by moving the first and second barrier bodies until the gap between the two barrier bodies meets the required distance so that the product is exposed only to those electron rays that come through the gap and hence receives the required dose.

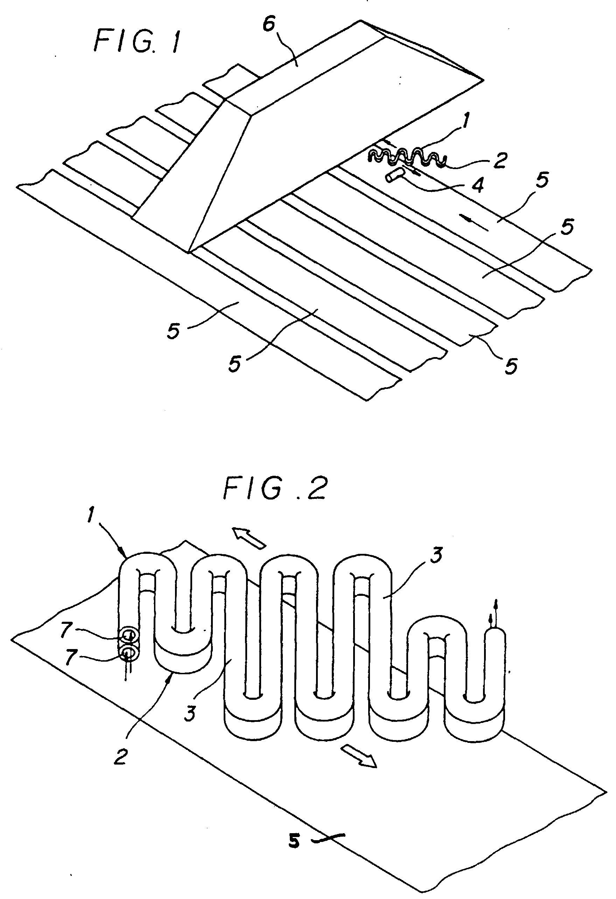

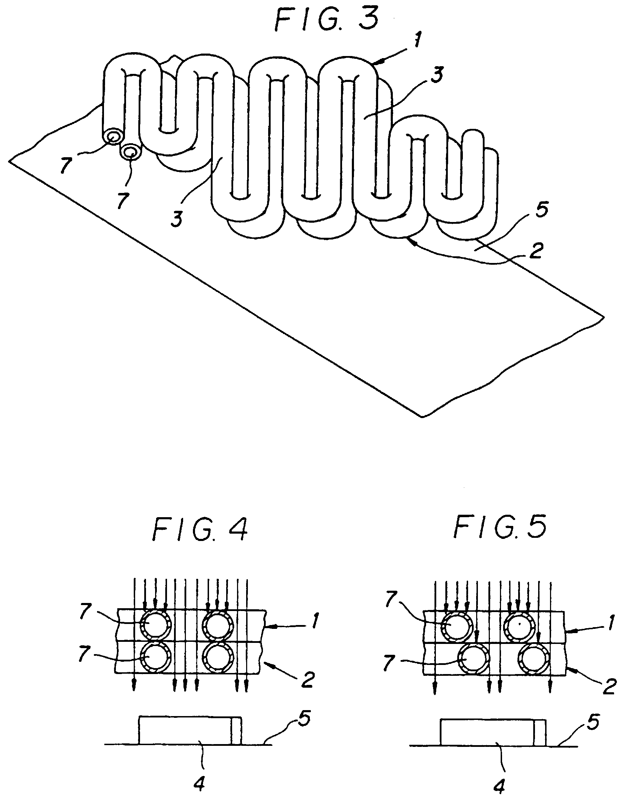

The barrier bodies and may be placed in a completely overlapped position through a sliding action between the irradiation device and the conveyor to maximise the gap through which electron rays can pass and therefore the exposure of the product to the rays (see Figures 2 and 4). For limiting the dose of the product, the first and second barrier bodies are moved relative to each other along the moving direction of the conveyor through a sliding action so that any two corresponding oblique sections of the barrier bodies that have been overlapped are now separated from each other to reduce the area of the gaps between any adjacent sections and hence to limit the exposure of the product to electron rays to a desired level.

When each of the first and second barrier bodies are provided with a conduit for coolant to run through its entire internal area, they can be effectively cooled even if they are excessively heated by the irradiated electron rays. Since the coolant is constantly circulated through the conduit in each of the barrier bodies, any danger of the coolant emitting heat due to the air bubbles formed within it through irradiation of electron rays, is effectively eliminated.

An example of the present invention will now be described with reference to the accompanying drawings, in which;
Figure 1 is a schematic perspective view of a first embodiment of the invention;
Figure 2 is a schematic perspective view of the first and second barrier bodies of the apparatus shown in Figure 1, where the first and second barrier bodies are found in a completely overlapped position;
Figure 3 is a perspective view similar to Figure 2 but showing the first and second barrier bodies separated from one another;
Figure 4 is a cross sectional view of part of the first and second barrier bodies under the condition of Figure 2, where the two barrier bodies are completely overlapped;
Figure 5 is a cross sectional view similar to Figure 4 but showing that the two barrier bodies are separated from one another;
Figure 6 is a schematic perspective view of a second embodiment of the invention, showing the first and second barrier bodies completely overlapped;
Figure 7 is schematic perspective view similar to Figure 6 but showing that the first and second barrier bodies are slightly separated from one another; and
Figure 8 is a cross sectional view of part of the embodiment of Figure 6 under the condition where the two bodies are slightly separated from one another.

The apparatus shown in Figures 1 through 5 is placed immediately below an electron ray irradiation device 6 for effectively removing monomers from a preform 4 of a synthetic resin product by means of electron rays emitted from the irradiation device 6. A first barrier body 1 and a second barrier body 2 have the same configuration, each having a plurality of oblique sections 3 arranged obliquely to the running direction of a conveyor 5. The first and second barrier bodies 1 and 2 are vertically juxtaposed and they each comprise a stainless steel pipe which is folded a number of times to form a zigzag route. Coolant passes through into the pipe. The stainless steel pipe is made of SU304 of Japanese Industrial Standards with a view to preventing rust being forming on the surface thereof under the influence of ozone generated by the electron rays.

The angle of the oblique sections 3 relative to the moving direction of the conveyor 5 is preferably between 15 and 90 degrees, but is not limited thereto.

In this embodiment, the conveyor 5 includes a number of buckets for receiving a preform 4 (not shown). Each bucket carries the preform 4 therein while the preform 4 is constantly rotated so that it is evenly exposed to electron rays.

The present invention is not limited to the case in which preforms carried by the conveyors are rotated. The case in which the carried preform is not rotated is included in the present invention.

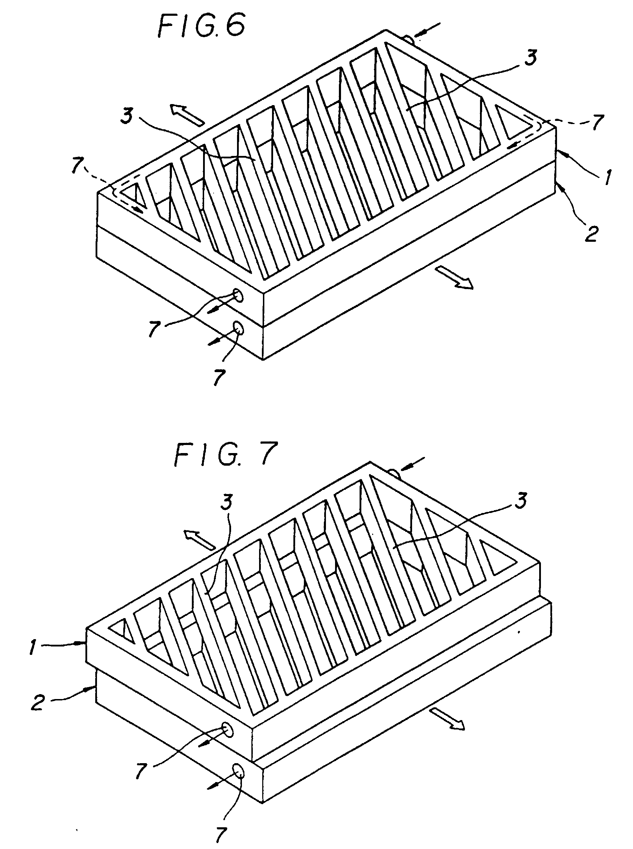

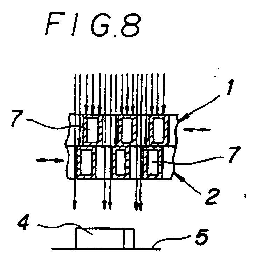

A second preferred embodiment of the invention will now be described with reference to the accompanying Figures 6 through 8.

Like the first embodiment, first and second barrier bodies 1 and 2 have the same configuration, but are vertically juxtaposed. Each barrier body comprises a rectangular shaped frame and a plurality of oblique sections obliquely arranged relative to the lateral and longitudinal members of the frame. The frame members and oblique sections are hollow in cross section and communicate with one another to form a complete route for circulation of coolant, for example water, that runs there through from one end of the route to the other.

An apparatus for controlling the dose of irradiation according to the invention is applicable not only to control of the dose of electron rays to synthetic resin products but also to that of ultraviolet or infrared rays to be used for surface treatment or material treatment.

The use of an apparatus for controlling the dose of irradiation according to the present invention is not limited to preforms of synthetic resin bottles or films but is applicable to those of synthetic resin tubes and other forms, as well as to metal products, paper products and so on.

As is apparent from the above description, since an apparatus for controlling the dose of irradiation according to the present invention can control the dose of electron rays, ultraviolet rays, infrared rays and the like reaching the products by adjusting the gap between its first and second barrier bodies, the running speed of a conveyor carrying the products can be determined so as to match the rate of supply of products rendering it unnecessary to reduce the speed of the conveyor to maximise the dose for the products. Consequently, with an apparatus in accordance with the invention, the problems of congested are production lines and reduced line productivity are obviated.

Furthermore, since each of the first and second barrier bodies is provided with a conduit for circulation of coolant, they can be effectively cooled even if they are undesirably heated by electron rays, and stored heat and any bubbles of air that are formed in the coolant can be effectively moved away to eliminate any danger of storage of excessive heat within the barrier bodies. Therefore, an apparatus for controlling the dose of irradiation according to the present invention is highly durable and hence remarkably cost effective.

## Claims

1. Apparatus for controlling the dose of irradiation of a product comprising a first barrier body (1) and a second barrier body (2), having the same configuration as the first barrier body (1), arranged in juxtaposition with one another, and arranged between a conveyor (5) of the product and an irradiation device (6) located opposite to the conveyor (5), the said first barrier (1) and the said second barrier (2) both being slidably movable along a running direction of the conveyor (5), characterised in that each body (1,2) comprises a plurality of oblique sections (3) arranged obliquely to the running direction of the conveyor (5), the relative position between the first barrier body (1) and the second barrier body (2) in the running direction of the conveyor (5) being so adjustable as to enable control of the dose of irradiation reaching the product.

2. Apparatus for controlling the dose of irradiation according to claim 1, wherein each of the first barrier body (1) and the second barrier body (2) is formed with a conduit (7) for circulation of coolant through an internal area of the body.

## Patentansprüche

1. Vorrichtung zur Steuerung der Bestrahlungsdosis eines Produktes, umfassend einen ersten Barrierenkörper (1) und einen zweiten Barrierenkörper (2), welcher die gleiche Konfiguration hat, wie der erste Barrierenkörper (1), welche nebeneinander angeordnet sind, und zwischen einer Transportvorrichtung (5) des Produktes und einer Bestrahlungsvorrichtung (6), welche sich gegenüber der Transportvorrichtung (5) befindet, angeordnet, wobei die erste Barriere (1) und die zweite Barriere (2) beide gleitend entlang einer Laufrichtung der Transportvorrichtung (5) beweglich sind, **dadurch gekennzeichnet**, daß jeder Körper (1, 2) eine Vielzahl von schrägen Abschnitten (3) umfaßt, welche gegenüber der Laufrichtung der Transportvorrichtung (5) schräg angeordnet sind, wobei die relative Position zwischen dem ersten Barrierenkörper (1) und dem zweiten Barrierenkörper (2) in der Laufrichtung der Transportvorrichtung (5) so einstellbar ist, daß die Steuerung der das Produkt erreichenden Bestrahlungsdosis ermöglicht wird.

2. Vorrichtung zur Steuerung der Bestrahlungsdosis nach Anspruch 1, **dadurch gekennzeichnet, daß** der erste Barrierenkörper (1) und der zweite Barrierenkörper (2) jeweils mit einem Kanal (7) zur Zirkulation eines Kühlmediums durch einen inneren Bereich des Körpers ausgebildet ist.

## Revendications

1. Appareil de réglage de la dose d'irradiation d'un produit, comprenant un premier corps formant barrière (1) et un deuxième corps formant barrière (2), ayant la même configuration que le premier corps formant barrière (1), juxtaposés l'un à l'autre et agencés entre un transporteur (5) du produit et un dispositif d'irradiation (6) disposé à l'opposé du transporteur (5), ladite première barrière (1) et ladite deuxième barrière (2) étant toutes deux mobiles de manière coulissante le long d'une direction de déplacement du transporteur (5), caractérisé en ce que chaque corps (1, 2) comprend plusieurs sections obliques (3) agencées obliquement par rapport à la direction de déplacement du transporteur (5), la position relative entre le premier corps formant barrière (1) et le deuxième corps formant barrière (2) dans la direction de déplacement du transporteur (5) étant réglable de manière à permettre le réglage de la dose d'irradiation atteignant le produit.

2. Appareil de contrôle de la dose d'irradiation selon la revendication 1, dans lequel chacun parmi le premier corps formant barrière (1) et le deuxième corps formant barrière (2) est pourvu d'un conduit (7) permettant la circulation d'un agent de refroidissement dans une zone interne du corps.
